# EUROPÄISCHE PATENTSCHRIFT

(11) **EP 1 629 814 B1**
(45) Veröffentlichungstag und Bekanntmachung des Hinweises auf die Patenterteilung: **26.05.2010**
(21) Anmeldenummer: 05012403.1
(22) Anmeldetag: 09.06.2005
(51) Int. Cl.: A61G 3/06

(54) **Rampe für ein Fahrzeug des Personenverkehrs, insbesondere für einen Bus**
Ramp for a vehicle for transporting persons, in particular for a bus
Rampe pour un véhicule pour les tranport des personnes, en particulier pour un bus

(30) Priorität: 31.08.2004 DE 202004013587 U
(43) Veröffentlichungstag der Anmeldung: 01.03.2006
(73) Patentinhaber: Hübner Transportation GbmH, 34123 Kassel (DE)
(72) Erfinder: Paul, Oliver, 34266 Niestetal (DE)
(74) Vertreter: Walther, Walther & Hinz GbR

(56) Entgegenhaltungen:
- DE-U1- 20 319 248
- GB-A- 2 306 152
- US-A- 6 050 208
- US-A1- 2003 213 072

## Beschreibung

Die Erfindung betrifft eine Rampe für ein Fahrzeug des Personenverkehrs, insbesondere für einen Bus, umfassend einen Rampenkörper und eine Rampenwanne zur klappbaren Aufnahme des Rampenkörpers, wobei die Rampenwanne im Bereich des Einstiegs im Boden des Fahrzeugs angeordnet ist, wobei die Kanten des Rampenkörpers eingefasst sind.

Aus der US 2003/0213072 A ist eine Rampeneinrichtung aus zwei Teilen bekannt, die durch ein Gelenk miteinander verbunden sind. Die beiden Rampenteile sind als Kunststoffspritzgussteile ausgebildet und besitzen eine rutschfeste Oberfläche.

Rampen als Einstiegshilfen für Rollstuhlfahrer in Fahrzeuge des öffentlichen Personennahverkehrs sind hinlänglich bekannt. Insbesondere bei Bussen sind Rampen für Rollstuhlfahrer im Einsatz. Hierbei gibt es verschiedene Ausführungsformen, und zwar solche die motorisch ein- und ausgefahren werden, und solche, die von Hand zu betätigen sind, wobei der Rampenkörper in die im Boden des Fahrzeugs eingelassene Rampenwanne nach Gebrauch ein- bzw. zum Gebrauch ausgeklappt wird. Das Ein- und Ausklappen geschieht selbstverständlich lediglich bei geöffneter Tür.

Die DE 203 19 248 U1 beschreibt in diesem Zusammenhang eine ausfahrbare Rampe, die im Ausstiegsbereich eines Fahrzeugs, z. B. eines Busses, im Boden untergebracht ist. Der Boden weist hierbei einen Ausschnitt zur Aufnahme der Rampe auf. Hierdurch soll einerseits die Benutzung für Rollstuhlfahrer erleichtert werden, da die Querkante entfällt. Andererseits soll durch diese Konstruktion die Bodenfreiheit des Fahrzeugs nicht beeinträchtigt werden.

Zudem ist aus der US 6,050,208 eine Plattenkonstruktion in Sandwichbauweise bekannt. Die Sandwichkonstruktion besteht hierbei aus zwei Lagen, zwischen denen eine Kunststoffschicht eingespritzt ist, die eine innige Verbindung zwischen den beiden Lagen bewirken soll.

Die GB 2 306 152 A beschreibt eine Klapprampe mit einer Rampenwanne und einem Rampenkörper, wobei sowohl die Rampenwanne als auch der Rampenkörper in Sandwichbauweise hergestellt sind.

Des Weiteren ist in diesem Zusammenhang bereits ein Rampenkörper bekannt, der einen Sandwichaufbau mit wabenförmiger Innenstruktur aufweist. Das heißt, der Rampenkörper besteht im Grunde aus zwei beabstandet zueinander angeordneten Platten, zwischen denen eine wabenförmige Struktur vorgesehen ist. Um die wabenförmige Struktur seitlich abzuschließen, ist insofern bereits bekannt, den Rampenkörper an seinen drei Außenkanten mit Aluminiumprofilen einzufassen. Diese Aluminiumprofile müssen zunächst auf Gehrung geschnitten werden, und werden dann anschließen auf den Rampenkörper aufgeklebt. Die Stoßkanten der Aluminiumprofile werden dann weiterhin abgedichtet, um ein Eindringen von Feuchtigkeit zu verhindern.

Korrespondierend zu der Ausbildung des Kantenbereichs des Rampenkörpers besitzt die Rampenwanne einen entsprechend ausgebildeten Randbereich, wobei der Randbereich der Rampenwanne ebenfalls aus einem Aluminiumprofil ausgebildet ist. Auch in diesem Zusammenhang gilt wieder, dass die Verwendung von Aluminiumprofilen zur Ausbildung des Randbereichs in der Rampenwanne sehr aufwendig und teuer ist.

Der Erfindung liegt daher die Aufgabe zugrunde, eine Rampe der eingangs genannten Art bereitzustellen, die preiswerter in der Herstellung ist.

Die Aufgabe wird erfindungsgemäß dadurch gelöst, dass der Rampenkörper zur Einfassung an seinen drei außenliegenden Kanten mit einem Kunststoff umspritzt ist, und wobei die Rampenwanne korrespondierend an drei Seiten einen angespritzten Kunststoffrand aufweist, der entsprechend zu der Kunststoffeinfassung der Kanten des Rampenkörpers ausgebildet ist. Hieraus wird deutlich, dass der Rampenkörper als Halbzeug in Form einer Sandwichplatte aus beispielsweise Aluminium lediglich in eine Spritzgießform eingelegt wird, und dort der Kunststoffrand angespritzt wird. Durch das

Anspritzen des Kunststoffrandes ergibt sich ein homogener dichter Abschluss, der keinerlei Möglichkeit zum Eindringen von Feuchtigkeit eröffnet.

Dadurch, dass die Rampenwanne an drei Seiten ebenfalls mit einem angespritzten Kunststoffrand versehen ist, der entsprechend zu der Kunststoffeinfassung der Kanten des Rampenkörpers ausgebildet ist, bilden im zusammengeklappten Zustand des Rampenkörpers in die Rampenwanne diese beiden Teile eine passende Einheit.

Des Weiteren ist vorgesehen, dass die Kanteneinfassung des Rampenkörpers zumindest an der Kante parallel zur Wagenkastenwand eine Schräge aufweist, um das Auffahren mittels Rollstuhl zu erleichtern. Vorzugsweise sind allerdings auch die übrigen Kanten entsprechend mit einer Schräge ausgebildet, und korrespondierend natürlich auch der Randbereich der Rampenwanne, um eben zu gewährleisten, dass der Rampenkörper von der Rampenwanne oberflächenbündig aufgenommen werden kann.

Wie bereits an anderer Stelle erläutert, ist der Rampenkörper in Sandwichbauweise ausgebildet, was bedeutet, dass eine wabenförmige Struktur zwischen zwei Platten vorgesehen ist. Um sicherzustellen, dass die aus Kunststoff angespritzte Kante mit dem Rampenkörper eine sichere und dauerhafte Verbindung eingeht, ist vorgesehen, dass der an die Kanten angespritzte Kunststoff in den Sandwichaufbau hineinragt.

Die Rampenwanne besitzt in diesem Zusammenhang im Bereich des Randes einen hakenförmigen Steg, der zur Fixierung des Kunststoffrandes mit dem Kunststoff umspritzt ist, um eine stabile Verbindung zu der Rampenwanne bereitzustellen.

Anhand der Zeichnungen wird die Erfindung nachstehend beispielhaft näher erläutert.
- Fig. 1: zeigt die Rampe in perspektivischer Darstellung;
- Fig. 2: zeigt einen Schnitt gemäß der Linie II-II aus Fig. 1;
- Fig. 3: zeigt einen Schnitt gemäß der Linie III-III aus Fig. 1.

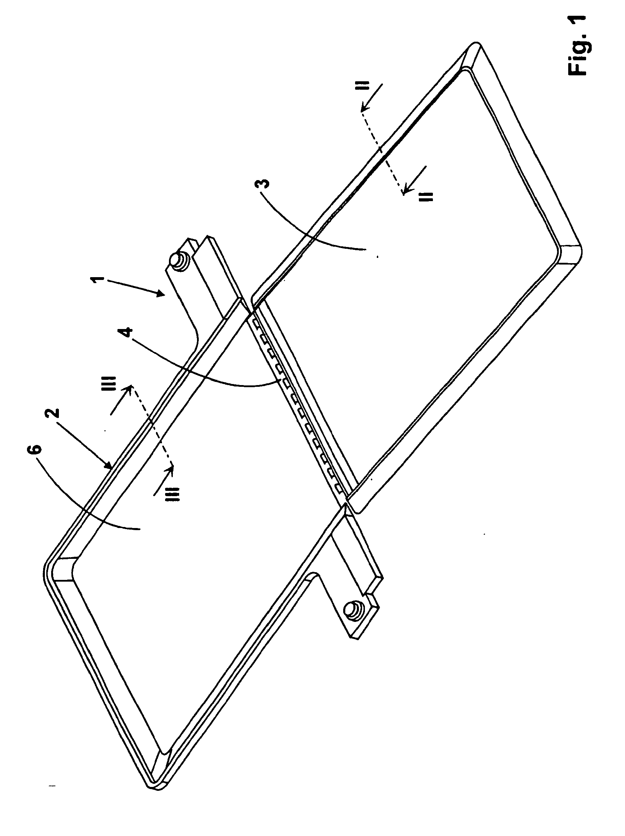

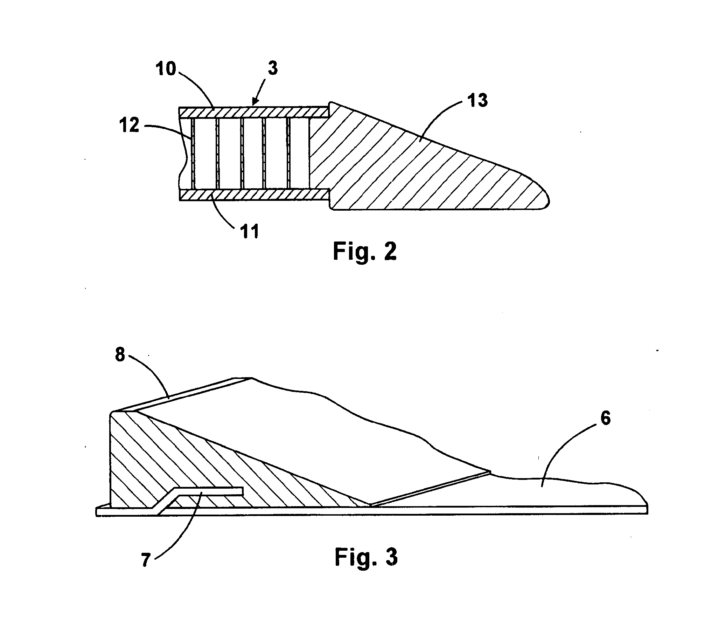

Gemäß Fig. 1 besteht die insgesamt mit 1 bezeichnete Rampe aus einer Rampenwanne 2 und dem Rampenkörper 3. Die Rampenwanne ist mit dem Rampenkörper durch ein Scharnierband 4 verbunden. Die Rampenwanne 2 ist im Boden des Fahrzeugs, beispielsweise eines Busses, eingelassen, so dass sich bei in die Rampenwanne eingeklapptem Rampenkörper eine mit der Oberseite des Bodens abschließende Fläche ergibt. Der Rampenkörper 3 weist einen sandwichförmigen Aufbau auf; d. h. der Rampenkörper 3 umfasst eine obere Platte 10 und eine untere Platte 11, zwischen denen die wabenförmige Struktur 12 vorgesehen ist (Fig. 2). An den drei außenliegenden Kanten des Rampenkörpers, d. h. mit Ausnahme der Kante, die das Scharnierband 4 aufnimmt, sind nunmehr zur Einfassung des Rampenkörpers im Querschnitt keilförmige Kanteneinfassungen angespritzt, so dass der Rampenkörper an drei Seiten durch eine solche keilförmige Einfassung aus Kunststoff, z. B. Polyurethan, abgeschlossen ist.

In Bezug auf die Rampenwanne 2 (Fig. 3) ist vorgesehen, das die Rampenwanne 2 entsprechend der keilförmigen Ausbildung der Kante 13 des Rampenkörpers, einen korrespondierenden Rand 8 aus Kunststoff, insbesondere Polyurethan, aufweist, wie sich dies aus Fig. 3 ergibt. Die Bodenplatte 6 der Rampenwanne weist in diesem Zusammenhang einen hakenförmigen Steg 7 auf, der mit dem Kunststoff, z. B. PU, umspritzt ist und der schlussendlich für die feste Verbindung zwischen dem Kunststoff und der Rampenwanne 2 sorgt.

## Patentansprüche

1. Rampe (1) für ein Fahrzeug des Personenverkehrs, insbesondere einen Bus, umfassend einen Rampenkörper (3) und eine Rampenwanne (2) zur klappbaren Aufnahme des Rampenkörpers (3), wobei die Rampenwanne (2) im Bereich des Einstieges im Boden des Fahrzeugs angeordnet ist, wobei die Kanten des Rampenkörpers (3) eingefasst sind,
**dadurch gekennzeichnet,**
**dass** der Rampenkörper (3) zur Einfassung an seinen drei außenliegenden Kanten mit einem Kunststoff umspritzt ist, und wobei die Rampenwanne (2) korrespondierend an drei Seiten einen angespritzten Kunststoffrand (8) aufweist, der entsprechend zu der Kunststoffeinfassung der Kanten (13) des Rampenkörpers (3) ausgebildet ist.

2. Rampe nach Anspruch 1,
**dadurch gekennzeichnet,**
**dass** der Rampenkörper (3) einen Sandwichaufbau aufweist, wobei der an die Kanten (13) angespritzte Kunststoff in den Sandwichaufbau hineinragt.

3. Rampe nach Anspruch 1,
**dadurch gekennzeichnet,**
**dass** die Kanteneinfassung (13) des Rampenkörpers (3) zumindest an der Kante parallel zur Wagenkastenwand eine Schräge aufweist, um das Auffahren mittels Rollstuhl zu erleichtern.

4. Rampe nach Anspruch 1,
**dadurch gekennzeichnet,**
**dass** die Rampenwanne (2) im Bereich des Randes einen hakenförmigen Steg (2) aufweist, der zur Fixierung des Kunststoffrandes mit dem Kunststoff umspritzt ist.

5. Rampe nach einem oder mehreren der voranstehenden Ansprüche,
**dadurch gekennzeichnet,**
**dass** der Kunststoff ein Polyurethan ist.

## Claims

1. Ramp (1) for a passenger transport vehicle, particularly a bus, comprising a ramp body (3) and a ramp trough (2) for folding reception of the ramp body (3), wherein the ramp trough (2) is arranged in the floor of the vehicle in the region of the entrance, wherein the edges of the ramp body (3) are framed, **characterised in that** the ramp body (3) is, for the framing, injection-moulded around at its three outwardly disposed edges by a plastics material and wherein the ramp trough (2) correspondingly has at three sides a plastics material edge (8) which is injection-moulded in place and constructed in correspondence with the plastics material framing of the edges (13) of the ramp body (3).

2. Ramp according to claim 1, **characterised in that** the ramp body (3) has a sandwich form of construction, wherein the plastics material injection-moulded in place at the edges (13) protrudes into the sandwich construction.

3. Ramp according to claim 1, **characterised in that** the edge framing (13) of the ramp body (3) has at least at the edge parallel to the vehicle body wall a chamfer to facilitate movement thereonto by means of a wheelchair.

4. Ramp according to claim 1, **characterised in that** the ramp trough (2) has in the region of the edge a hook-shaped web (2) which is injection-moulded around by the plastics material for fixing of the plastics material edge.

5. Ramp according to one of more of the preceding claims, **characterised in that** the plastics material is a polyurethane.

## Revendications

1. Rampe (1) pour un véhicule de transport en commun, en particulier pour un autobus, comprenant un corps de rampe (3) et une cuvette de rampe (2) destinée à recevoir le corps de rampe (3) par rabattement, la cuvette de rampe (2) étant disposée dans la zone de l'entrée dans le plancher du véhicule, les bords du corps de rampe (3) étant encadrés,
**caractérisée en ce que**
le corps de rampe (3) est enrobé d'une matière plastique par moulage le long de ses trois bords extérieurs pour former un encadrement, et
dans laquelle la cuvette de rampe (2) comporte de façon correspondante, sur trois côtés, une bordure en matière plastique (8) formée par enrobage qui est conformée d'une façon qui correspond à l'encadrement des bords (13) du corps de rampe (3).

2. Rampe selon la revendication 1,
**caractérisée en ce que**
le corps de rampe (3) présente une structure en sandwich, la matière plastique moulée le long des bords (13) pénétrant dans la structure en sandwich.

3. Rampe selon la revendication 1,
**caractérisée en ce que**
l'encadrement des bords (13) du corps de rampe (3) comporte un biseau au moins le long du bord parallèle à la paroi de la carrosserie du véhicule, pour faciliter l'entrée avec un fauteuil roulant.

4. Rampe selon la revendication 1,
**caractérisée en ce que**
la cuvette de rampe (2) comporte dans la région du bord, une ailette (2) en forme de crochet, qui est enrobée de matière plastique par moulage pour assurer l'ancrage du bord en matière plastique à la matière plastique.

5. Rampe selon l'une ou plusieurs des revendications précédentes,
**caractérisée en ce que**
la matière plastique est un polyuréthane.
